Europäisches Patentamt

European Patent Office

Office européen des brevets

(11) Numéro de publication: **0 248 733**
**A1**

## (12) DEMANDE DE BREVET EUROPEEN

(21) Numéro de dépôt: 87401240.4

(22) Date de dépôt: 03.06.87

(51) Int. Cl.⁴: **B 01 J 47/00**
**B 01 J 8/00**

(30) Priorité: 04.06.86 FR 8608063

(43) Date de publication de la demande:
09.12.87 Bulletin 87/50

(84) Etats contractants désignés:
BE CH DE ES GB LI

(71) Demandeur: **Framatome**
**Tour Fiat 1 place de la Coupole**
**F-92400 Courbevoie (FR)**

(72) Inventeur: **Lavalerie, Claude**
**12, Résidence du Bois de Boulogne**
**F-95250 L'Isle Adam (FR)**

(74) Mandataire: **Mongrédien, André et al**
**c/o BREVATOME 25, rue de Ponthieu**
**F-75008 Paris (FR)**

(54) Dispositif de chargement de résines échangeuses d'ions.

(57) Il comporte :
- une trémie (47),
- une chambre de réception située sous la trémie, ladite chambre comportant une ouverture de sortie à laquelle est raccordée une goulotte d'évacuation (65) et un tube de sortie souple (67) situé dans le prolongement de la goulotte (65),
- de premiers moyens de transfert (61) situés dans la chambre de réception (53) pour transférer ladite résine vers le tube de sortie (67),
- de seconds moyens de tranfert (71) situés dans le tube de sortie (67) et sur toute la longueur de ce dernier, pour transférer ladite résine vers un entonnoir de chargement dudit échangeur d'ions.

FIG. 4

EP 0 248 733 A1

**Description**

Dispositif de chargement de résines échangeuses d'ions.

L'invention concerne un dispositif de chargement de résines anioiques ou cationiques dans les échangeurs d'ions utilisés pour le traitement des effluents et des fluides des différents circuits d'une centrale nucléaire à eau sous pression.

Les centrales nucléaires à eau sous pression comportent de nombreux circuitsde fluide, notamment le circuit primaire. Le fluide primaire qui circule dans ce circuit a une double fonction ; il agit comme fluide caloporteur destiné à extraire les calories fournies par la réaction en chaîne au sein du réacteur, mais aussi comme fluide modérateur en association avec certains additifs, plus particulièrement l'acide borique.

Les conditions de fonctionnement très sévères et la nature des produits chimiques utilisés provoquent l'apparition de produits de corrosion, en dépit des matériaux utilisés. De tels éléments en suspension ou en solution dans l'eau circulent à travers le coeur du réacteur, dans lequel ils sont soumis à une irradiation violente qui modifie leur nature en créant des isotopes radioactifs.

Il est donc indispensable de retirer l'ensemble de ces éléments du circuit primaire lors des différentes phases de fonctionnement. D'un autre côté, il est nécessaire, lors de la dilution, par exemple du fluide primaire, de ne rajouter que de l'eau parfaitement déminéralisée.

C'est le rôle des circuits associés, en particulier du circuit de contrôle volumétrique et chimique sur lequel sont disposés divers moyens d'injection d'additifs ou d'eau d'appoint qu'une pomp de charge pourra réintroduire dans le fluide primaire.

Un autre circuit, le circuit de traitement des effluent liquides, purifie de tout élément radioactif les effluents qui doivent retourner dans les bâches de stockage situées à l'extérieur de l'enceinte de confinement.

L'ensemble de ces circuits est donc traité sur des lits de résines cationiques et anionques contenues dans des échangeurs d'ions situés hors de l'enceinte de confinement. En raison de la raidoactivité accumulée dans ces résines, ces échangeurs sont situés dans des bâtiments à murs de béton épais assurant une protection biologique efficace. Ces résines échangeuses d'ions ont une capacité d'échange limitée et une fois arrivées à saturation, elles ne peuvent pas être régénérées. Les résines saturées sont donc évacuées par un système de chasse et recueillies dans des fûts avec isolation et protection biologique jusqu'au lieu de retraitement. Les échangeurs sont alors à nouveau remplis d'un nouveau volume de résines neuves.

Actuellement, le chargement de ces résines est effectué de façon manuelle. L'échangeur d'ions est muni d'un conduit d'adduction décentré par rapport à la casemat dans laquelle il est enfermé. Ce conduit se prolonge jusqu'à une hauteur telle que sa bride de liason vienne affleurer le plancher de service. Un etonnoir est alors vissé sur cette bride tandis que le personnel déverse manuellement des sacs de résine dans ce même entonnoir. Par gravité, les résines, guidées dans le conduit, s'accumulent dans l'échangeur d'ions.

Toutefois, malgré le décentrement du conduit et la protection biologique de béton, un risque d'esposition du personnel subsiste.

La présente invention a pour objet un dispositif de chargement mécanique d'un échangeur de résines qui remédie à ces inconvénients. Il permet le chargement à distance des échangeurs d'ions à résines à partir d'une zone non exposée. Il permet par conséquent d'éviter que le personnel de manutention soit exposé à des doses radioactives.

Conformément à l'invention, le dispositif de chargement comporte:
- une trémie,
- une chambre de réception située sous la trémie, ladite chambre comportant une ouverture de sortie à laquelle est reccordée une goulotte d'évacuation, et un tube de sortie souple situé dans le prolongement de la goulotte,
- de premiers moyens de transfert situés dans la chambre de réception pour transférer ladite résine vers le tube de sortie,
- de seconds moyens de transfert situés dans le tube de sortie et sur toute la longueur de ce dernier, pour transférer ladite résine vers un entonnoir de chargement dudit échangeur d'ions.

Grâce autube souple de liaison, la trémie de chargement peut être placée à distance de l'échangeur d'ions, et à l'abri de protection biologiques efficaces.

Les premiers moyens de transfert entraînent les résines vers le tube souple; puis les seconds moyens de transfert les entraînent jusqu'au T de chargement de l'échangeur. Les résines se déversent alors dans l'échangeur d'ions. Le temps d'exposition est limité au temps que met un intervenant pour débrider une tape d'obturation d'une ouverture latérale de chargement, ce temps pouvant encore être réduit par l'utilisation d'un raccord à chaîne, pour introduire l'extrémité du tuyau dans le T de chargement, et pour effectuer les opérations inverses.

De préférence, le dispositif de chargement comporte en outre une chambre de dévoûtage, située entre la trémie et la chambre de réception, et dans laquelle est disposé un arbre tournant supportant une pluralié de bras disposés de façon hortogonale.

Ainsi, lorsque les résines sont déversées dans la trémie, le dévoûteur consitué par les bras tournants évite la formation d'agglomérats.

D'autres caractéristiques et avantages de l'invention apparaîtront encore à la lecture de la description qui suit d'un exemple de réalisation donné à titre illustratif et nullement limitatif, en référence aux dessins annexés. Sur ces dessins:

- la figure 1 est vue en élévation d'un échangeur d'ions à résine et d'un dispositif de chargement adapté à cet échangeur et conforme à l'invention,

- les figures 2 et 3 sont des vues de détail de deux variantes de la partie terminale du dispositif d'alimentation en résine de l'échangeur représenté sur la figure 1,

- la figure 4 est une vue latérale du dispositif de chargement conforme à l'invention représenté sur la figure 1,

- la figure 5 est une vue de détail de moyens de dévoûtage faisar.t partie d'un dispositif de chargement représenté sur la figure 4.

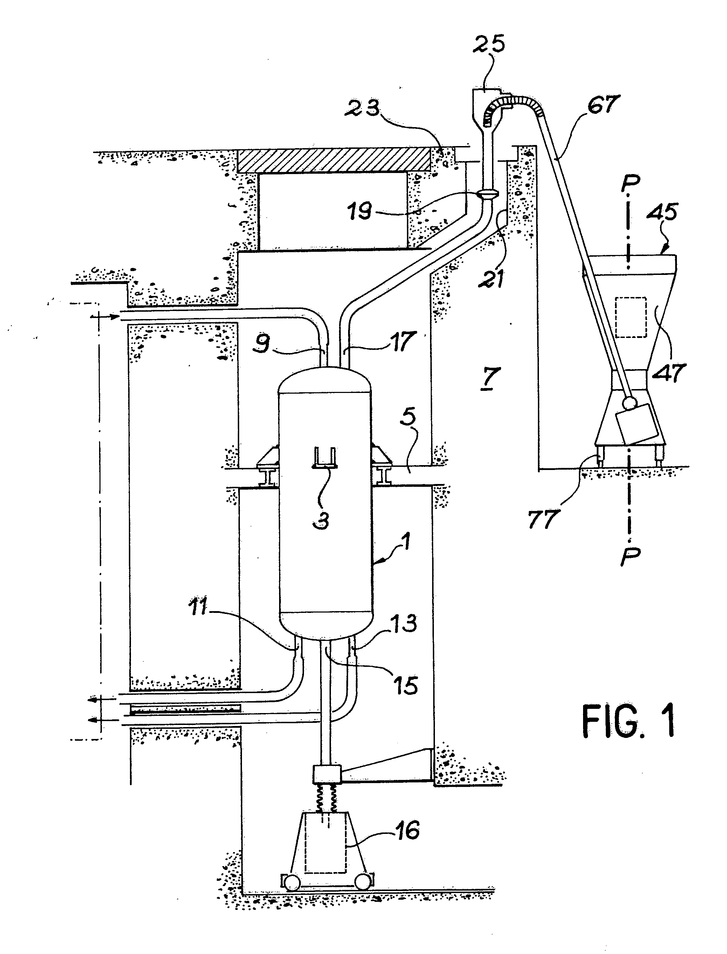

On a représenté sur la figure 1 une vue en élévation d'un échangeur d'ions à résine. Cet échangeur, désigné par la référence générale 1, repose par l'intermédiaire de patins 3 sur un support 5 lié à la structure de béton 7. Différents piquages sonts raccordés à l'échangeur. Un piquage 9 aboutissant à la partie supérieure de l'échangeur permet d'introduire le fluide à traiter après que ce dernier a été dépressurisé et ramené à une température compatible avec les produits organiques qui constituent les résines. Deuz piquages, 11 et 13, aboutissant à la partie inférieure de l'échangeur, permettent l'évacuation et le traitement en continu de ce même fluide. Des crépines, de type classique (non représentées), sont placées dans les piquages 11 et 13 afin que seul le fluide puisse passer, les résines étant retenues. Un piquage central 15 situé également à la partie inférieure de l'échangeur est utilisé pour la vidange des résines usées. Ces résines usées sont recueillies dans un réservoir de décharge. Celui-ci peut être monté comme indiquè sur la figure 1 sur un chariot mobile 16, mais plus généralement il est situé à distance dans un local prévu à cet effet, le transfert des résines contaminées se faisant alors au moyen d'une circulation d'eau qui entraîne lesdites résines. Des vannes de type classique (non représentées) permettent d'isoler les piquages 11 et 13 afin que le fluide qui entre au sommet de l'échangeur par le piquage 9 puisse agir comme une chasse et évacuer les résines. A cet effet, le piquage 15 ne comporte pas de crépine.

Enfin, un piquage 17 présentant deux coudes de sens opposés, se prolonge jusqu'à une bride de liaison 19 logée dans un évidement 21 prévu dans la dalle du plancher de circulation.

Le piquage 17 permet l'alimentation de l'échangeur d'ions en résines neuves.

Selon l'art antérieur actuellement connu, lors du fonctionnement de l'échangeur d'ions, la bride 19 est obturée par une tape fixée par des boulons. Le rechargement est effectué au moyen d'un entonnoir (non représenté) qui est vissé en lieu et place de la tape sur la bride 19. Cet entonnoir est constitué d'une portion cylindrique verticale liée à une partie supérieure de forme cylindro-tronconique. Ce dispositif de chargement est vissé de façon manuelle par accès direct dans l'évidement 21 du plancher de circulation 23. Lorsqu'un tel entonnoir a été fixé, les résines sont chargées manuellement à l'aide de sacs déversés dans l'entonnoir. Les résines s'écoulent par gravité jusque dans l'échangeur d'ions au travers du piquage 17.

Toutefois, comme on l'a expliqué dans la partie introductive de la description, malgré le décentrement du conduit 21 par rapport à l'axe de l'échangeur 1, et malgré la protection biologique constituée par le plancher de circulation 23, un risque d'exposition de personnel subsiste.

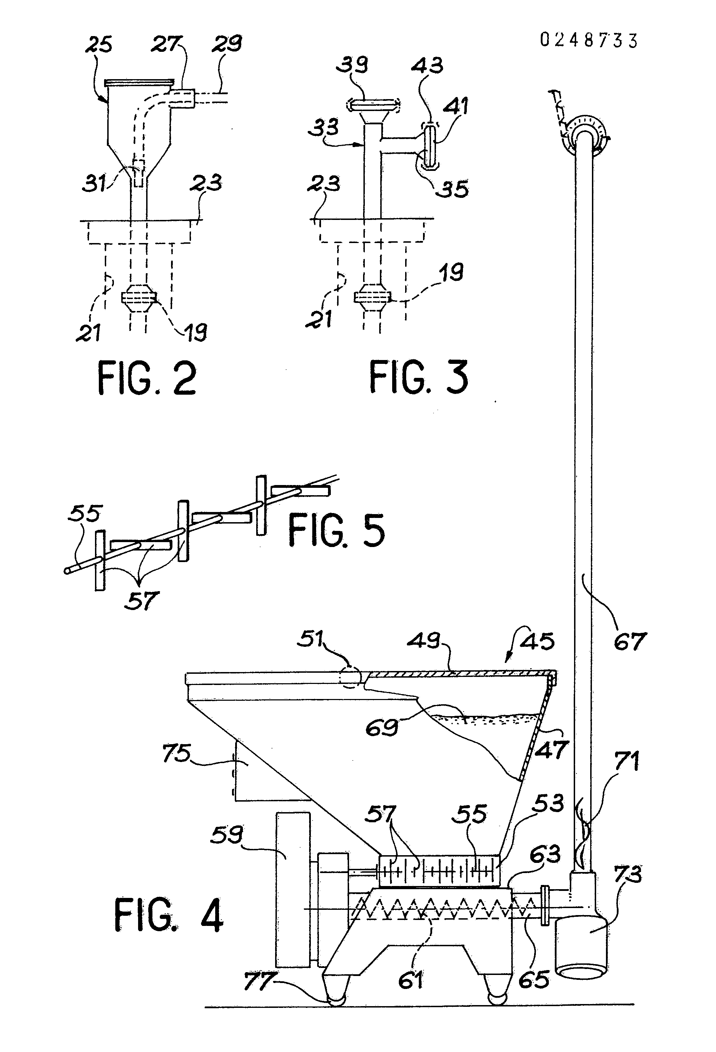

L' invention remédie à cet inconvénient. A cette fin, elle comporte tout d'abord un entonnoir de chargement 25 représenté sur la figure 1 et plus particulièrement sur la figure 2. Cet entonnoir, fixé à demeure sur la bride 19, comporte un piquage latéral 27 pour l'introduction d'un tuyau souple 29 terminé de préférence par un embout de guidage 31. La fonction du tuyau et de l'embout, qui ont été représentés en traits pointillés sur la figure 2, sera expliquée ultérieurement en référence à la figure 4.

Selon une variante de réalisation de l'invention (figure 3), on a prévu, à la place de l'entonnoir de chargement 25, un raccord en T, référencé 33, muni de deux bridages 35 et 37 et vissé en pied sur la bride 19. Une tape d'obturation 39 ferme l'extrémité supérieure, tandis qu'une tape d'obturation 41 ferme, également de façon hermétique, l'orifice d'introduction latéral 35. De préférence, la tape 41 est fixée sur la bride 35 au moyen d'un raccord souple à chaîne 43 plutôt que des boulons, comme cela se fait de façon classique.

On a représenté sur la figure 4 un dispositif de chargement 45 conforme à l'invention. Il est constitué d'une trémie 47 .qui peut être fermée par un couvercle 49 monté de manière pivotante sur la trémie. Le courvercle 49 est muni de contacts électriques de sécurité 51 qui interdisent la commande du motoréducteur 59 quand le couvercle n'est pas en position correcte. Une chambre de dévoûtage 53 est raeccordée à l'extrémité inférieure de la trémie. Dans cette chambre, on trouve un arbre 55 monté tournant, supportant une pluralité de bras 57 (voir figure 5) disposés de façon orthogonale. L'arbre 55 est entraîné en rotation par un groupe motoréducteur 59. Le groupe motoréducteur entraîne parallèlement une première vis de transfert, ou vis de chargement 61, située dans une chambre de réception placée sous la chambre de dévoûtage 53. La chambre 63 comporte une ouverture de sortie à laquelle est raccordée une goulotte d'évacuation 65. Un tube souple de sortie 67 est situé dans le prolongement de la goulotte 65 perpendiculairement à celle-ci. Ce tube semi-rigide est réalisé par exemple en polyamide. Les moyens de transfert 61 sont consitués par une vis hélicoïdale en fils plats, du type vis d'Archimède, dont l'axe longitudinal est parallèle à l'arbre tournant 55. Cette vis est entraînée par le même groupe motoréducteur 59 que l'arbre tournant 55. La vis de transfert 61 déverse la résine 69 dans la goulotte 65. La résine est ensuite reprise par un ressort de transfert 71 qui est également du type hélicoïdal en fils plats. Ce ressort 71 est présent sur toute la longueur du tube souple de chargement 67. Il est entraîné en rotation par un moteur 73 situé à l'extrémité inférieure du ressort de chargement 71. A l'autre extrémité du tube souple 67 est fixée une pièce de guidage 31 qui facilite l'introduction de l'extrémité de ce tube dans l'entonnoir de guidage 25 représenté sur la figure 2 ou dans l'ouverture 35 T de chargement 33 représenté sur la figure 3.

L'ensemble du dispositif de chargement, à savoir le groupe motoréducteur 59 et le moteur 73, est alimenté en énergie électrique et piloté par le boîtier de commande 75 fixé sous la trémie.

On peut apprécier sur la figure 1 la position du tube d'alimentation 67 par rapport à un plan P de symétrie verticale de trémie 47. Par ailleurs, on remarque que le dispositif de chargement est monté sur des roulettes 77 de manière à être déplaçable.

Le fonctionnement du dispositif est le suivant :

L'intervenant commence par débrider la tape d'obturation 41 qui ferme l'ouverture latérale. Cette opération est rendue plus rapide par l'utilisation d'un raccord à chaîne 43 qui nécessite moins de temps pour son ouverture et se fermeture que des boulons de type classique (voir figure 3). La pièce de guidage 31 est ensuite introduite à l'intérieur de T 33 ou de l'entonnoir 25 (figure 2). L'extrémité du tuyau 67 ayant été mise en place, l'operation de chargement peut débuter. Les résines sont versées dans la trémie 45. Les bras tournants 57 évitent la formation d'agglomérats tandis que les vis de transfert 61 et 71 entraînent les billes de résine jusqu'au T de chargement ou à l'entonnoir, selon le cas. Les résines se déversent ensuite dans l'échangeur par le piquage 17 (voir figure 1).

Le chargement étant effectué, on retire le tuyau souple, puis on referme la tape d'obturation 41 au moyen du raccord à chaîne 43.

Grâce à la machine de chargement qui vient d'être décrite, le temps d'exposition d'un intervenant aux radiations émises par les résines est limité au temps nécessaire pour, d'une part, débrider la tape d'obturation, introduire l'extrémité du tuyau souple et d'autre part retirer l'extrémité de ce tuyau et remettre la tape en place lorsque le chargement a été effectué. Entre ces deux opérations, le chargement peut s'effectuer en toute sécurité à l'abri des radiations.

**Revendications**

1. Dispositif de chargement de résine dans un échangeur d'ions, caractérise en ce qu'il comporte:
- une trémie (47),
- une chambre de réception située sous la trémie, ladite chambre comportant une ouverture de sortie à laquelle est raccordée une goulotte d'évacuation (65) et un tube de sortie souple (67) situé dans le prolongement de la goulotte (65),
- de premiers moyens de transfert (61) situés dans la chambre de réception (53) pour transférer ladite résine vers le tube de sortie (67),
- de seconds moyens de transfert (71) situés dans le tube de sortie (67) et sur toute la longueur de ce dernier, pour transférer ladite résine vers un entonnoir de chargement dudit échangeur d'ions.

2. Dispositif selon la revendication 1, caractérisé en ce qu'il comporte en outre une chambre de dévoûtage, située entre la trémie et la chambre de réception et dans laquelle est disposé un arbre tournant supportant une pluralité de bras.

3. Dispositif selon l'une quelconque des revendications 1 et 2, caractérisé en ce que les premiers et les seconds moyens de transfert sont constitués chacun par un ressort hélicoïdal entraîné par une groupe motoréducteur.

4. Dispossitif selon la revendication 3, caractérisé en ce que l'arbre tournant disposé dans la chambre de dévoûtage est actionné par le groupe motoréducteur qui entraîne les premiers moyens de transfert.

5. Dispositif selon l'une quelconque des revendications 1 à 4, caractérisé en ce que lesdits seconds moyens d'entraînement sont entraînés en rotation par un moteur indépendant.

6. Dispositif selon l'une quelconque des revendications 1 à 5, caractérisé en ce que le tube de sortie est terminé par un embout de guidage.

7. Dispositif selon l'une quelconque des revendications 1 à 6, caractérisé en ce que la trémie comporte un couvercle muni d'un système de fermeture de sécurité.

8. Dispositif selon l'une quelconque des revendications 1 à 7, caractérisé en ce qu'il comprend en outre un entonnoir (25), présentant une ouverture latérale (27), et fixé à un piquage (17) de l'échangeur d'ions.

9. Dispositif selon l'une quelconque des revendications 1 à 6, caractérisé en ce qu'il comporte en outre un T de chargement (33) présentant une ouverture latérale obturée par une tape (41) fixée par un raccord à chaînes (43).

0248733

FIG. 1

0248733

FIG. 2

FIG. 3

FIG. 5

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 478 045 (LIBRA) <br> * Page 1, ligne 24 - page 2, ligne 18 * | 1,3,5 | B 01 J 47/00 <br> B 01 J 8/00 |
| | --- | | |
| A | PATENT ABSTRACTS OF JAPAN, vol. 9, no. 300 (M-433) [2023], 27 novembre 1985; & JP-A-60 137 713 (ICHIEDA SANGYO K.K.) 22-07-1985 * Abrégé * | 2,4 | |
| | --- | | |
| A | FR-A-2 312 437 (DOSAPRO MILTON ROY) <br> * Page 2, ligne 7 - page 4, ligne 13 * | 1-5 | |
| | ----- | | |

DOMAINES TECHNIQUES
RECHERCHES (Int. Cl.4)

B 01 J
B 65 G
G 21 F

Le présent rapport de recherche a été établi pour toutes les revendications

| Lieu de la recherche | Date d'achèvement de la recherche | Examinateur |
|---|---|---|
| LA HAYE | 09-09-1987 | WENDLING J.P. |